# NEUE EUROPÄISCHE PATENTSCHRIFT

(11) **EP 0 667 936 B2**
(45) Veröffentlichungstag und Bekanntmachung des Hinweises auf die Entscheidung über den Einspruch: **05.07.2000**
(45) Hinweis auf die Patenterteilung: 23.04.1997
(21) Anmeldenummer: 93915638.6
(22) Anmeldetag: 07.07.1993
(51) Int. Cl.: F16B 37/06

(54) **VERFAHREN ZUR HERSTELLUNG EINES AUSPRESS- UND DREHFESTEN VERBUNDTEILS DURCH EINPRESSEN EINES EINPRESSTEILS IN EIN BLECHTEIL SOWIE DAFÜR GEEIGNETE EINPRESSTEILE**
METHOD OF FABRICATING A COMPOUND PART BEING SECURE AGAINST ROTATION AND INSERT EJECTION BY PRESSING AN INSERT INTO A SHEET METAL AND INSERTS USABLE THEREFORE
PROCEDE DE FABRICATION UN ELEMENT COMPOSITE ETRE RESISTANT A L'EJECTION ET DE SE CONTOURNER PAR PRESSER UN ELEMENT D'INSERTION DANS UNE PIECE EN TOLE ET ELEMENT D'INSERTION CONVENABLE POUR CE PROCEDE

(30) Priorität: 07.07.1992 DE 9209059 U; 24.08.1992 DE 9211342 U
(43) Veröffentlichungstag der Anmeldung: 23.08.1995
(73) Patentinhaber: RICHARD BERGNER GMBH & CO, 91124 Schwabach (DE)
(72) Erfinder: SCHNEIDER, Wilhelm, D-91126 Rednitzhembach (DE)
(74) Vertreter: Tergau, Enno, Dipl.-Ing.
(86) Internationale Anmeldenummer: DE9300602
(87) Internationale Veröffentlichungsnummer: WO9401688

(56) Entgegenhaltungen:
- BE-A- 558 873
- DE-C- 2 545 581
- DE-C- 3 447 006
- DE-C- 3 704 763
- DE-C- 3 937 903
- GB-A- 852 411
- JP-A- 58 135 516
- US-A- 1 579 875
- US-A- 3 736 969
- US-A- 4 543 023
- Prospekt MICRODOT INDUSTRIAL FASTENING SYSTEM GROUP, 1985
- Prospekt RIBE STRUX, April 1984
- DUBBEL Taschenbuch für den Maschinenbau, 17. Auflage,1990, S.71
- Prospekt HILGELAND Maschinenfabrik, 2.10.1990

## Beschreibung

Die Erfindung betrifft ein Verfahren der im Oberbegriff des Anspruchs 1 genannten Art. Für ein solches Verfahren bestimmte Einpreßteile können ein Bolzen oder eine Schraube oder auch ein nach Art einer Mutter wirksamer Innengewindeträger sein.

Einpreßteile der genannten Art in der Form einer Einpreßschraube sind beispielsweise Gegenstand von D-C-25 45 581. Als Einpreßmutter sind sie beispielsweise bekannt aus der Fachzeitschrift "DRAHTWELT" 5-1975, S. 173.

Nach dem Einpressen in ein Blech zu einem Verbundteil brauchen Einpreßteile der vorstehend genannten Art zum Aufschrauben einer Mutter oder zum Einschrauben eines Gewindebolzens keinen Gegenhalter mehr. Dies bedeutet eine erhebliche Montageerleichterung auch für Reparaturfälle. Außerdem gibt es Anwendungsfälle, bei denen das Einpreßteil nach dem Einbau für einen Gegenhalter nicht mehr zugänglich ist.

Ein Nachteil eines eine Einpreßschraube der bekannten Art enthaltenden Verbundteiles besteht darin, daß die Einpreßschraube eine nur begrenzte Mindestklemmlänge aufweist. Bei einer normalen Schraube entspricht die Klemmlänge dem Abstand zwischen der Auflagefläche des Schraubenkopfes und dem kopfseitigen Gewindeende eines auf den Schraubenschaft aufgeschraubten Innengewindeträgers. Diese Mindestklemmlänge wird bei der eingangs genannten Preßschraube durch vier Längenabschnitte reduziert. Zwei dieser Längenabschnitte dienen der Verdrehsicherheit und der Auspreßsicherheit. Die Verdrehsicherheit wird bei der eingangs genannten Schraube durch einen an den Schraubenkopf angesetzten, über den Schaftdurchmesser hinausstehenden Bund mit radial vorstehenden Armen gebildet, die sich beim Stauchen in das Flachmaterial einbetten, so daß dieses in Zwischenräume zwischen den Armen fließt (DE-C-25 45 581).

Die Auspreßsicherheit wird durch eine unterhalb dieses der Verdrehsicherung dienenden Bundes liegende Ringausnehmung erzielt, in die das durch die Radialarme verdrängte Flachmaterial eingepreßt wird. An die Ringausnehmung schließen sich dann noch ein Kalibrierbund und ein üblicher Gewindeauslauf an. Damit die Ringausnehmung mit einer zur Gewährleistung der Auspreßsicherheit ausreichenden Menge verdrängten Materials gefüllt werden kann, müssen die Abmessungen der Radialarme und der Ringausnehmung auf die jeweilige Blechdicke abgestimmt sein. Je nach Dicke des zu bearbeitenden Blechs müssen also unterschiedliche Schrauben vorgesehen werden. Die Nachteile für Lagerhaltung und Logistik liegen auf der Hand.

Ein weiterer Nachteil der vorbekannten Schraube besteht darin, daß im Fügezustand die Blechdicke aufgrund der Materialverdrängung durch die Radialarme des der Verdrehsicherung dienenden Bundes verringert wird. Dadurch ist die Fügeverbindung in dem für ihre Auspreßsicherheit entscheidenden Hinterschneidungsbereich der Ringausnehmung geschwächt.

Bei einem Verbundteil mit dem in der Fachzeitschrift "DRAHTWELT' beschriebenen als Innengewindeträger ausgebildeten Einpreßteil erfolgt die Auspreßsicherung, d.h. also die Fixierung in Axialrichtung, durch Materialverdrängung in einen Hinterschneidungsbereich. Als Verdrängungselement auf der Kopfunterseite des Einpreßteils dient hier ein in Axialrichtung vorstehender umlaufender Ringvorsprung mit Kerbverzahnung. Der Ringvorsprung dringt beim Einpressen des Einpreßteils in die Lochung eines Bleches in das Blechmaterial ein und verdrängt dieses in einen Hinterschneidungsbereich. Auch dieses Verbundteil hat den Nachteil der oben beschriebenen Schwächung der Fügeverbindung durch Reduzierung der Blechdicke.

Schließlich sind Verbundteile mit als Innengewindeträger ausgebildeten Einpreßteilen bekannt, die einen an ihrem Kopf angesetzten angesenkten und auf seinem Umfang kerbverzahnten Hohlschaft aufweisen. Im Fügezustand dient die Kerbverzahnung als Verdrehsicherung. Durch die Innenansenkung des in das Innengewinde einmündenden Schaftendes läßt sich die Einpreßmutter nach Art eines Hohlniets mit einem im Flachmaterial vorgeformten Loch fest verbinden. Nachteilig bei diesen Einpreßteilen ist vor allem, daß die Länge des Hohlschaftes an die jeweilige Blechdicke angepaßt sein muß. Die Folge sind aufwendige Lagerhaltung und Logistik.

Weiterhin ist aus US-A-3 253 631 ein Verbundteil bekannt, dessen Einpreßteil im wesentlichen auch die Merkmale des im Oberbegriff des Anspruches 1 beschriebenen, beim erfindungsgemäßen Verfahren verwendeten Einpreßteils aufweist, welches jedoch mit seinem Schaftteil unmittelbar vor dem Fügeverfahren die Lochung des Bleches selbst ausstanzt. Dabei ist die beim Stanz- und Fügevorgang als Gegenhalter wirksame Auflagefläche des Bleches in seinem den Lochrand umgebenden Bereich mit einem in Richtung auf das Einpreßteil vorstehenden Ringkragen versehen, der beim Fügevorgang den Lochrand des Bleches in den Ringraum und in eine Formschlußverbindung mit den Formvorsprüngen preßt. Dabei wird der Lochrand in Axialrichtung des Einpreßteils aus der ursprünglichen Blechebene hinausgedrückt. Dadurch entsteht beim Verbundteil auf der dem Einpreßteil abgewandten Seite eine ausgeprägte, das Schaftteil des Einpreßteiles umgebende Ringnut, die z.B. bei einem mit einer Schraube als Einpreßteil gebildeten Verbundteil die Gegenhaltefläche für ein durch eine aufgeschraubte Mutter zu fixierendes Teil reduziert und die Flächenpressung erhöht. Dadurch, daß der den Lochrand umgebende Bereich aus der Blechebene nach Art eines Tiefziehvorgangs hinausgedrückt wird, reduziert sich zwangsläufig die Blechstärke des genannten Bereiches. Die Anwendung dieses Verfahrens bei sehr dünnen Bleche dürfte daher nur bedingt möglich sein.

Bei einem aus EP-A-0 437 011 bekannten Fügeverfahren wird die Lochung des Bleches zu einem über die Blechoberfläche hinausstehenden, im wesentlichen zylindrischen Halskragen aufgebogen, dessen dem Einpreßteil entgegenstehendes Ende beim Fügevorgang zur Bildung einer die Blechstärke gewissermaßen verdoppelnden Materialanhäufung radial zur Längsachse nach außen gefaltet wird. Die aus dem Kopfteil des Einpreßteils vorstehenden Formvorsprünge dringen beim Fügevorgang in Axialrichtung des Schaftes in diese Blechstärkenverdickung ein, aus welcher Blechmaterial durch Kaltfließen in den Ringraum des Kopfteils eingepreßt wird. Durch die radial nach außen gerichtete Umlegung des Halskragens fehlt zwischen dessen mit den Formvorsprüngen des Kopfteils verzahnten Bereich und dem Lochrand eine stoffliche Verbindung, was die Drehfestigkeit der Fügeverbindung beeinträchtigt. Außerdem dürfte sich die Entstehung von die Stabilität der gesamten Fügeverbindung verringernden Rissen beim Umlegen des Halskragens bei weinger duktilen Materialien kaum vermeiden lassen. Diese Risse sowie der nach außen offene Spalt zwischen dem umgelegten Halskragen und der damit in Kontakt stehenden Blechoberfläche bergen auch die Gefahr der Entstehung von Spaltkorrosion in sich.

Aus BE-A-558 873 ist das Herstellungsverfahren eines eine Annietmutter enthaltenden Verbundteiles mit wesentlichen Merkmalen des Oberbegriffs des Anspruches 1 bekannt. Bei diesem bekannten Verfahren wird das Blechmaterial durch einen Verdrängungsvorgang in die Ringnut eines in die Öffnung eines Bleches einzusetzenden Halsteiles einer Einpreßmutter hineingedrückt. Dazu wird während des Einpreßvorgangs das Kopfteil in die Blechoberfläche eingedrückt, wobei das dabei verdrängte Blechmaterial in die Ringnut fließt. Der für die Auspreßsicherheit maßgebliche Lochrandbereich wird dadurch auf Kosten der Auspreßsicherheit der Einpreßmutter in seiner Dicke reduziert. Das bekannte Verfahren dürfte daher auch bei sehr dünnen Blechen kaum anwendbar sein.

Der Erfindung liegt die Aufgabe zugrunde, Verbundteile der eingangs genannten Art mit guter Verdreh- und Auspreßsicherheit zu schaffen, die die Nachteile des Standes der Technik nicht aufweisen, insbesondere bei gleichen Abmessungen mit Flachmaterial unterschiedlicher Wandstärke in gleicher Weise verpreßbar sind und die in ihrer Ausführungsform als Einpreßschrauben eine vergleichsweise größere Einschraub- bzw. Klemmlänge aufweisen. Diese Aufgabe wird durch ein Verfahren mit den Merkmalen des Anspruches 1 und mit einem dazu verwendeten Einpreßteil nach dem Anspruch 4 gelöst.

Besonders vorteilhaft ist bei der Ausführung des Einpreßteils als Schraube oder Bolzen die durch Stauchen bewirkte Ausformung der schaftseitigen Flanke des Ringraumes durch das benachbarte Einwalzen einer zur Längsachse konzentrischen Ringnut in den Schaft, wenn der Innendurchmesser der Ringnut kleiner als der Gewindekerndurchmeser eines aufzuschraubenden Innengewindeträgers bzw. einer aufzuschraubenden Mutter ist. Dann dient nämlich diese Ringnut als kopfseitiger Gewindeauslauf des Außengewindes.

Bei dem erfindungsgemäßen Verfahren ist das Flachmaterial mit einer die Form eines aus ihrer Flachebene vorstehenden Halskragens aufweisenden Lochung versehen, deren

Halsweite einen zum Durchführen des Schaftes ausreichenden Innendurchmesser aufweist. Dadurch erfolgt im Umfangsbereich des Schaftes eine Materialanhäufung. Dieses dort angehäufte Material steht beim Einpreßvorgang für das Einpressen in den zwischen Schaftteil und Kopfteil befindlichen Ringraum zur Verfügung und gewährleistet dadurch in besonders hochgradigem Maße die angestrebte Auspreßsicherheit. Dadurch bedarf es keiner durch einen Materialverdrängungsvorgang hervorgerufenen Fließverformung zum Eindringen des Flachmaterials in den Ringraum. Das Flachmaterial behält auf diese Weise im wesentlichen seine ursprüngliche Dicke bei, wird also nicht, wie dies bei den Einpreßteilen nach dem Stande der Technik der Fall ist, in dem für die Auspreßsicherheit und bei dünnen Blechen auch für die Gesamtstabilität der Fügeverbindung ausschlaggebenden Bereich geschwächt. Diese vorteilhafte Wirkung wird dann noch verbessert, wenn der Lochrand des Halskragens in eine etwa radiale Richtung zur Längsachse des Einpreßteils einwärts gebogen ist. In diesem Fall ist die Materialanhäufung im Lochrandbereich nochmals erhöht. Außerdem ist das Einpressen des Einpreßteiles erleichtert, da der Lochrand des Halskragens bereits radial ausgerichtet ist und nicht erst unter Aufwendung von Druckkraft in diese Ausrichtung gebogen werden muß.

Der Gegenstand der Erfindung wird anhand von in den Figuren dargestellten Ausführungsbeispielen näher erläutert. Es zeigen:
- Fig. 1: teilweise im Schnitt entsprechend der Schnittlinie I-I in Fig. 2 eine Seitenansicht einer erfindungsgemäßen Einpreßschraube,
- Fig. 2: eine Unteransicht des Schraubenkopfes in Pfeilrichtung II von Fig.3,
- Fig. 3: eine Seitenansicht analog Fig. 1 des Rohlings der Einpreßschraube mit bereits durch eine Stauchung ausgeformter Unterseite des Schraubenkopfes,
- Fig. 4: eine Darstellung der Einpreßschraube analog Fig. 1 in ihrer Füge-Ausgangsstellung gegenüber einem hierfür bereits vorbereiteten Trägerblech,
- Fig. 5: eine Darstellung analog Fig. 4 in einer Relativstellung zwischen Einpreßschraube und Trägerblech zu Beginn des Einpreßvorganges,
- Fig. 6: eine Darstellung analog Fig. 5 mit einer alternativen Ausgestaltung des Trägerbleches,
- Fig. 7: eine Darstellung analog Fig. 4, 5 und 6 der fertig in das Trägerblech eingepreßten Einpreßschraube,

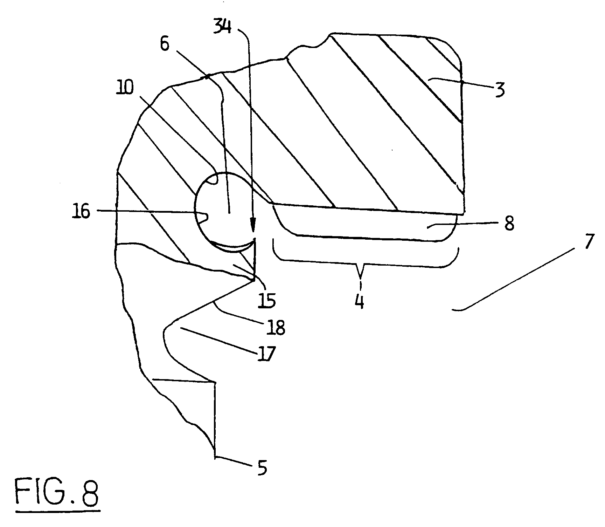

- Fig. 8: eine Detailansicht des Bereiches VIII in Fig.4,
- Fig. 9: ein Ausführungsbeispiel einer Einpreßschraube mit Senkkopf in Seitenansicht,
- Fig. 10: ein Ausführungsbeispiel einer Einpreßschraube, bei der die Oberseite des Schraubenkopfes zur Einpreßung in ein Flachteil ausgebildet ist,
- Fig. 11: einen vergrößerten Detailausschnitt gemäß Bereich XI in Fig. 10,
- Fig. 12: eine Draufsicht auf die Oberseite des Schraubenkopfes in Pfeilrichtung XII von Fig.10,
- Fig. 13: eine Schnittdarstellung einer Einpreßmutter in ihrer Ausgangs-Fügestellung analog Fig. 4,
- Fig. 14: eine Darstellung analog Fig. 7 der fertig in das Trägerblech eingepreßten Einpreßmutter,
- Fig. 15: eine Schnittdarstellung des Rohlings einer Einpreßmutter,
- Fig. 16: eine Darstellung analog Fig. 15 mit aufgeweitetem Schaftteil,
- Fig. 17: eine Darstellung analog Fig. 16 mit eingeschnittenem Innengewinde.

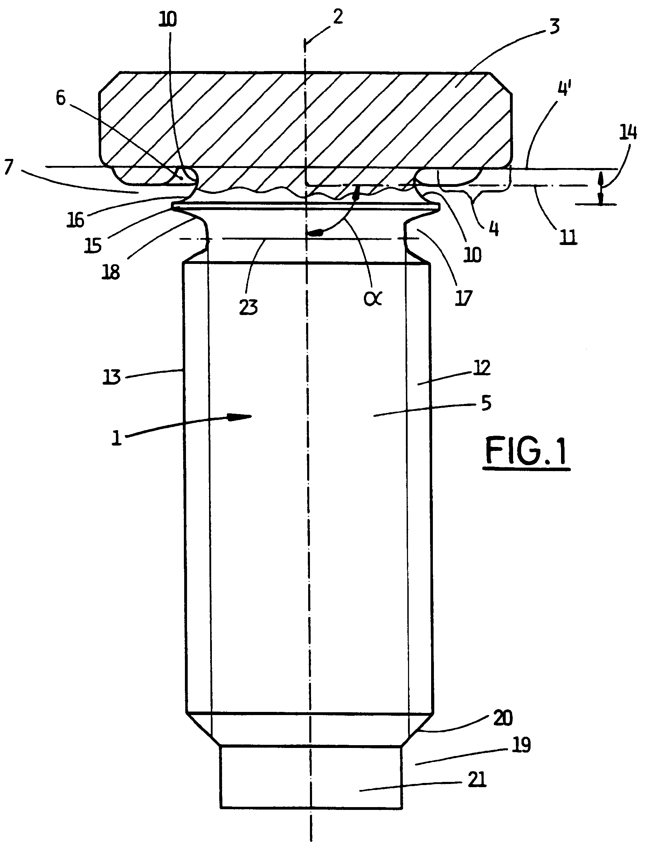

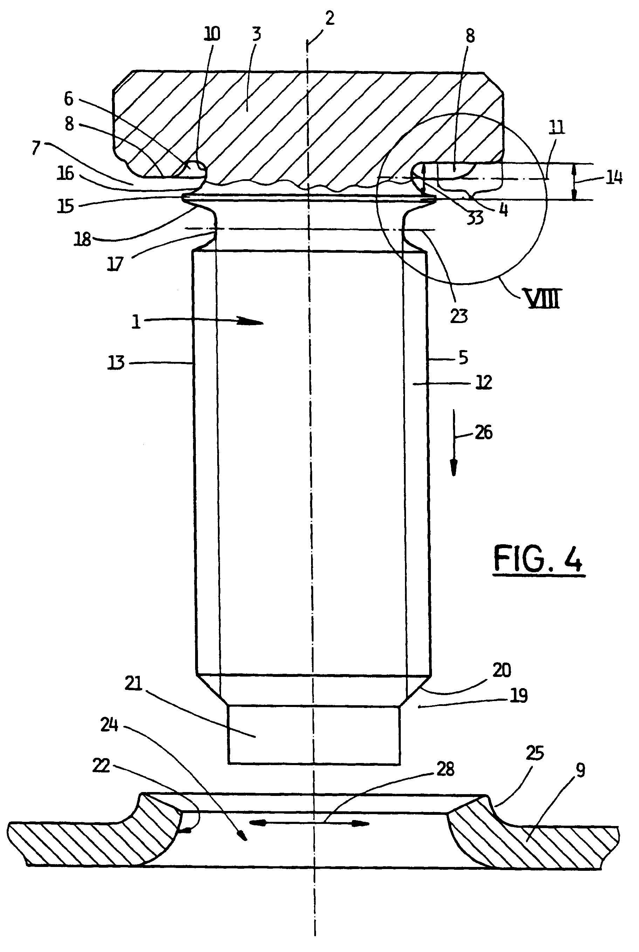

Das in Fig. 1 dargestellte Einpreßteil ist als Einpreßschraube ausgebildet. Es wird im folgenden kurz als "Schraube" 1 bezeichnet. Die Schraube 1 enthält um eine gemeinsame Längsachse 2 angeordnet einen Schraubenkopf 3 größeren Durchmessers mit einer zur Längsachse 2 im wesentlichen radialen Auflagefläche 4 und einen einseitig in Achsrichtung über die Auflagefläche 4 hinausstehenden, zur Längsachse 2 konzentrischen Schaft 5 kleineren Durchmessers. Im Übergangsbereich zwischen Schraubenkopf 3 und Schaft 5 ist eine zur Längsachse 2 konzentrische, radial nach außen offene Einschnürung (Ringraum 6) angeordnet. Diese Einschnürung dient bei der Fügeverbindung der Schraube 1 mit einem Flachmaterial (im folgenden mit "Blech" bezeichnet) als Ringraum 6 für die Aufnahme des Blechmaterials. Der Ringraum 6 reicht von der Schaftseite her aus einem vom Schraubenkopf 3 nicht umgebenen Bereich 7 in Axialrichtung bis an die von der Kopfauflagefläche 4 aufgespannte Ebene 4' heran. Außerhalb des Schaftdurchmessers und über den Kopfumfang verteilt stehen aus der Auflagefläche 4 langwulstartig Formvorsprünge 8 hervor. Diese sind im Fügezustand formschlüssig im Blech 9 (Fig. 4 ff) eingebettet und gewährleisten durch Drehmomentaufnahme die Verdrehsicherung gegenüber dem Blech 9. In dem Ausführungsbeispiel gemäß Fig. 1 reicht der Ringraum 6 bis an die von der Auflagefläche 4 aufgespannte Ebene 4' heran. Es ist jedoch auch denkbar, daß er sich über diese Ebene 4' hinaus in den Schraubenkopf 3 hinein erstreckt. Ebenso ist es möglich, daß die Auflagefläche 4 nicht, wie in Fig. 1 dargestellt, rechtwinklig zur Längsachse 2 verläuft, sondern mit dieser einen spitzen, zur Oberseite des Schraubenkopfes 3 konvergierenden Winkel bildet. In diesem Fall ist die Auflagefläche 4 Teil einer Kegelmantelfläche. Wenn vorstehend von der Oberseite und nachstehend von der Unterseite des Kopfteiles eines Einpreßteils die Rede ist, so besagt dies nichts über die absolute Lage des Einpreßteils im Fügezustand. Vielmehr ist unter Oberseite die im Fügezustand dem Flachmaterial abgewandte und unter Unterseite die dem Flachmaterial zugewandte Seite des Kopfteils zu verstehen. Der Ringraum 6 kann dann bis an diese gedachte Kegelmantelfläche heranreichen oder sich darüber hinaus in den Schraubenkopf 3 hinein erstrecken. Der Ringraum 6 weist die Querschnittsform etwa einer Rinne mit ausgerundetem Rinnenboden 10 auf. Die Mittelachse 11 der Rinnenform bildet mit der längsachse 2 einen Winkel α von etwa 90°. Die Rinnenform kann aber auch dergestalt sein, daß ihre Mittelachse 11 mit der Längsachse 2 einen zur Oberseite des Schraubenkopfes konvergierenden leicht spitzen Winkel α bildet.

Die Formvorsprünge 8 stehen nach Art von Langwülsten aus der Auflagefläche 4 hervor und verlaufen etwa radial zur Längsachse 2. Die Formvorsprünge sind in gleichen Umfangsabständen auf dem Kopfumfang verteilt und erstrecken sich nahezu über die gesamte Breite der Auflagefläche. Zwischen dem mit einem Gewinde 12 versehenen Schaftabschnitt 13 und dem Schraubenkopf 3 ist mit Abstand 14 zur Auflagefläche 4 ein in Radialrichtung vorstehender Ringvorsprung 15 angeordnet. Er weist eine spitz zulaufende, etwa keilförmige Querschnittsform auf. Die kopfseitige Flanke 16 des Ringvorsprungs 15 bildet die schaftseitige Flanke des Ringraumes 6. Der Ringvorsprung 15 steht in Radialrichtung über den Umfang des Schaftes 5 hinaus. Unterhalb des Ringvorsprunges 15 weist der Schaft 5 eine Ringnut 17 mit einer U-förmigen Querschnittsform auf. Die schaftseitige Flanke 18 des Ringvorsprungs 15 bildet den kopfseitigen U-Schenkel der Ringnut 17. Der andere U-Schenkel der Ringnut 17 dagegen bildet den kopfnahen Gewindeauslauf des Gewindes 12. Die Mittelachse 23 der U-förmigen Querschnittsform der Ringnut 17 verläuft etwa rechtwihklig zur Längsachse 2. Das Freiende 19 des Schaftes 5 geht mit einer den schaftseitigen Gewindeauslauf des Gewindes 12 bildenden Schulter 20 in ein Endstück 21 mit kleinerem Durchmesser über.

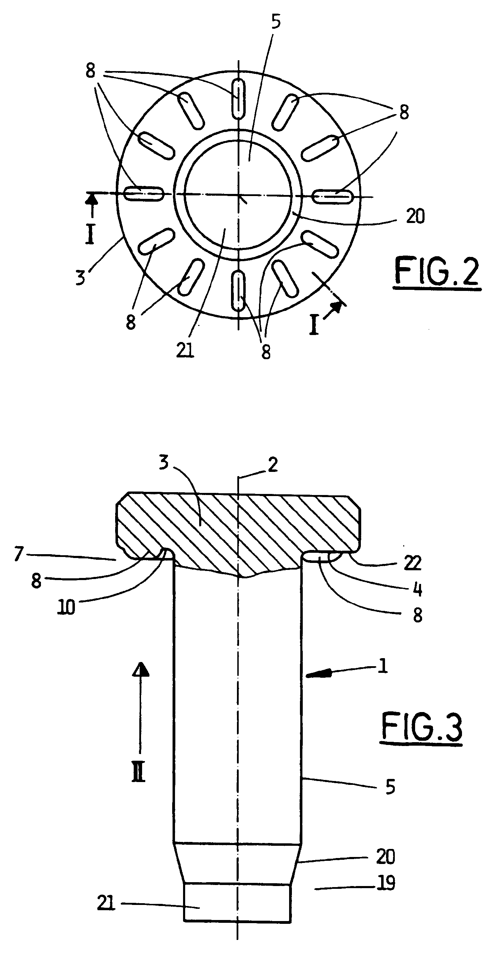

In Fig. 2 und 3 ist ein Rohling einer Schraube 1 dargestellt. Die Unterseite des Schraubenkopfes weist bereits die durch eine Stauchung erzeugten Formvorsprünge 8 auf. Zur Herstellung der fertigen Schraube wird in den Schaft ein Gewinde 12 und die Ringnut 17 eingewalzt. Letzteres bewirkt, daß Material des Schaftes 5 in Richtung zum Schraubenkopf 3 verdrängt wird und dabei in Radialrichtung aufwächst. Auf diese Weise wird der Ringvorsprung 15 geformt, dessen nach Art einer Hohlkehle ausgerundete Flanke 16 die schaftseitige Flanke des Ringraums 6 bildet. Der Innendurchmesser der Ringnut 17 ist so bemessen, daß er kleiner ist als der Gewindekerndurchmesser eines aufzuschraubenden Innengewindeträgers.

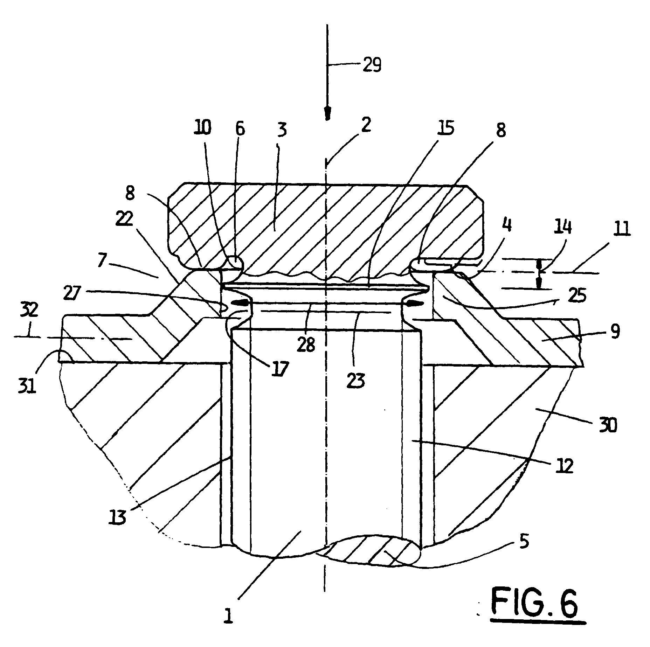

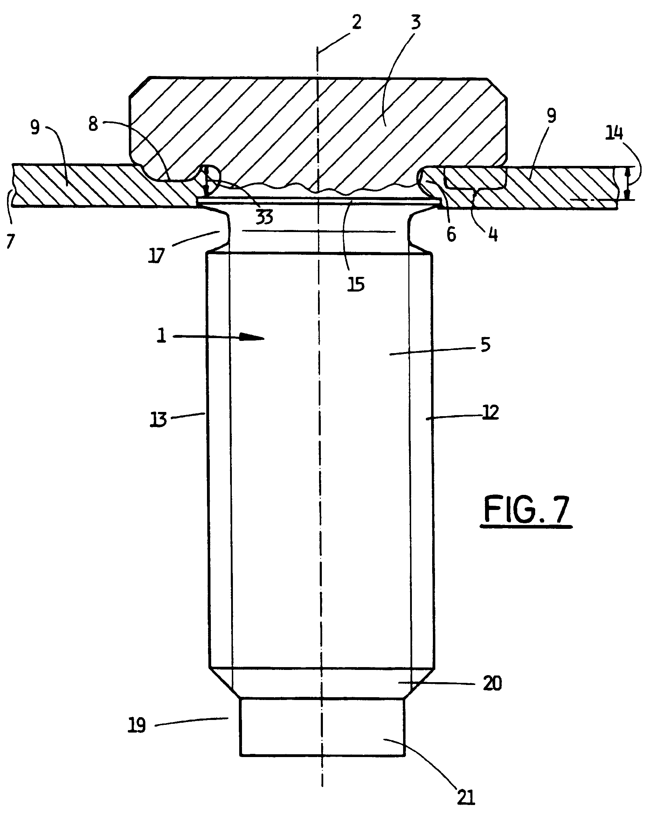

Die einzelnen Verfahrensschritte zum Einpressen einer erfindungsgemäßen Schraube in ein Blech 9 gehen aus Fig. 4 bis Fig. 7 hervor. Das Blech wird zunächst vorbereitet, indem es mit jeweils einer Schraube 1 zugeordneten und einen Halskragen 22 aufweisenden Löchem 24 versehen wird. In dem in Fig. 4 dargestellten Beispiel wird zuerst ein Loch im Blech durch Stanzen oder Bohren hergestellt und anschließend der Lochrand 25 zu einem Halskragen 22 aufgebördelt. Dieser kann sich aus der Blechoberfläche heraus in Einführrichtung 26 der Schraube 1 oder, wie in Fig. 4 dargestellt, gegen diese Richtung erstrecken. In Fig. 6 ist eine alternative Ausgestaltung des Halskragens 22 dargestellt. Der Lochrand 25 des Halskragens 22 ist hier in etwa radialer Richtung zur Längsachse 2 einwärts gebogen, so daß die Lochwandung 27 etwa in einer konzentrisch zur Längsachse 2 angeordneten Zylindermantelfläche verläuft. Der Vorteil dieser Ausgestaltung liegt zum einen in einer erhöhten Materialanhäufung im Lochrandbereich. Zum anderen ist der Kraftaufwand zum Herstellen der Fügeverbindung gegenüber der Halskragen-Ausgestaltung gemäß Fig. 4 reduziert, da weniger Verformungsarbeit geleistet werden muß. Dies wirkt sich positiv auf die Werkzeugstandzeiten aus.

Der Lochdurchmesser 28 ist so bemessen, daß sich die Schraube 1 abriebfrei in das Loch 24 einsetzen läßt. Im Falle von oberflächenbeschichteten Schrauben kann dies also ohne Verletzung ihrer Beschichtung erfolgen.

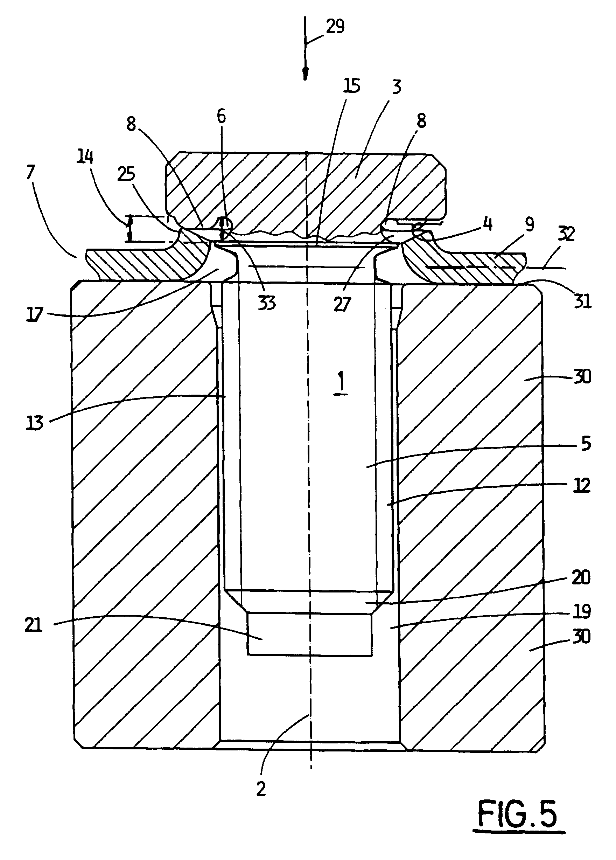

Das Herstellen der Fügeverbindung zwischen Schraube 1 und Blech 9 geschieht wie folgt: Der Schraubenkopf wird in Pfeilrichtung 29 (Fig. 5) mit einem Preßstempel (nicht dargestellt) beaufschlagt. Als Gegenwerkzeug dient eine in Form eines Hohlzylinders ausgebildete Patrize 30, deren dem Schraubenkopf 3 zugewandte Stirnseite 31 als Auflagefläche für das Blech 9 bzw. als Gegenfläche für den Preßstempel dient. Mit dem Einpressen der Schraube wird der Halskragen 22 in die Blechebene 32 rückverformt. Dabei verringert sich der Lochdurchmesser 28, wodurch die Lochwandung 27 auf den sich an die Unterseite des Schraubenkopfes 3 anschließenden Schaftbereich gepreßt wird. Dabei fließt Blechmaterial in den Ringraum 6 ein und füllt diesen nahezu vollständig aus. Die Formvorsprünge 8 der Auflagefläche 4 dringen vollständig in das Blech ein. Dadurch wird eine formschlüssige Drehfixierung der Schraube 1 im Blech 9 erreicht. Das von den Formvorsprüngen 8 verdrängte Material fließt zusätzlich in den Ringraum 6 ein und unterstützt dessen vollständige Ausfüllung. Bei Blechen mit einer größeren Dicke als der Abstand 14 zwischen der Auflagefläche und dem Ringvorsprung 15 wird die Lochwandung 27 beim Fügevorgang auf den Ringvorsprung 15 formschlüssig aufgepreßt. Die Folge ist ein noch wirksamerer Formschlußeingriff der Schraube in das Trägerblech. Bei einer späteren Belastung in Richtung etwa der Blechebene mit der Wirksamkeit einer Aufweitung des Loches 24 steht dieser Formschlußeingriff der Lochaufweitung entgegen und verbessert die Festigkeit der Blechverbindung. Der Formschlußeingriff, der am gesamten Umfang des Ringvorsprungs 15 wirksam ist, verbessert außerdem die Wasserdichtigkeit der erfindungsgemäßen Fügeverbindung.

Im Fügezustand ist der ursprünglich aus der Blechebene vorstehende Halskragen 22 so weit zurückverformt, daß er praktisch vollständig in der Blechebene 32 verläuft. Es steht dadurch auf der Schaftseite des Bleches 9 eine ebene Auflagefläche für anzuklemmende Verbindungsteile zur Verfügung. Dies kann insbesondere dann von Vorteil sein, wenn elektrische Verbindungsteile, beispielsweise Ösen von Massekabel, angeklemmt werden sollen. Die erfindungsgemäße Fügeverbindung weist eine hohe Verdrehfestigkeit selbst bei dünnsten Blechen auf, deren Dicke sogar geringer ist als der Abstand 14. Dies ist insbesondere von Vorteil beim Aufschrauben von selbstsichemden, ein erhöhtes Aufschraub-Drehmoment aufweisenden Muttern oder bei der Demontage korrodierter Verbindungen im Reparaturfall.

Eine für die Auspreßsicherheit entscheidende Größe ist der Scherquerschnitt 33, d.h. also die Breite des Ringraums 6 in Axialrichtung. Dadurch, daß die Formvorsprünge 8 an der Unterseite des Schraubenkopfes 3 außerhalb des Ringraums 6 angeordnet sind, erfolgt an keiner Stelle eine Schwächung des in Axialrichtung wirksamen Scherquerschnitts 33 und damit der Auspreßfestigkeit der Fügeverbindung.

Eine weitere, die Gesamtfestigkeit der Fügeverbindung erhöhende zusätzliche Maßnahme liegt darin, daß der sich beim Einwalzen der Ringnut 17 aufwulstende Ringvorsprung 15 durch eine ihn radial nach innen beaufschlagende Formwalzung an einer weiteren radialen Ausdehnung gehindert wird. Dabei wird zwangsläufig der überschüssige Werkstoff in eine nicht vom Walzwerkzeug beaufschlagte Richtung, also in Richtung auf den Schraubenkopf 3 umgeleitet. Dadurch entsteht an der kopfseitigen Flanke 16 des Ringvorsprungs 15 ein scharfer Axialgrat 34, der in Richtung auf den Schraubenkopf vorsteht. Dieser Grat führt beim Einpressen der Schraube 1 zu einem noch wirksameren Formschlußeingriff in das Trägerblech bei einer späteren Belastung des Schaftes in Richtung etwa der Blechebene 32.

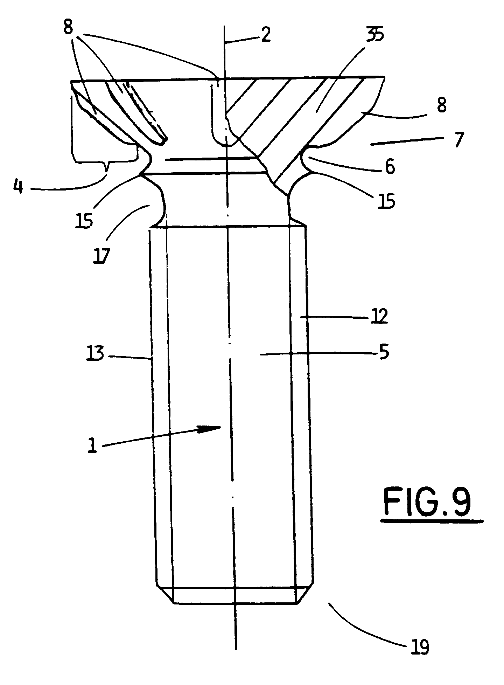

Fig. 9 zeigt ein Ausführungsbeispiel einer erfindungsgemäßen Schraube mit einem Senkkopf 35. Die Schraubenunterseite verläuft in einer in Schaftrichtung konvergierenden Kegelmantelfläche. Aus der Auflagefläche 4 stehen langwulstartige Formvorsprünge 8 heraus, die sich in Radialrichtung über nahezu die gesamte Breite der Auflagefläche 4 erstrecken und in gleichen Abständen auf dem Kopfumfang verteilt sind. Nach dem Einpressen einer derartig ausgestalteten Schraube verläuft die Oberseite des Schraubenkopfes fluchtend mit der Ebene der dem Schraubenkopf zugewandten Oberseite des Bleches 9.

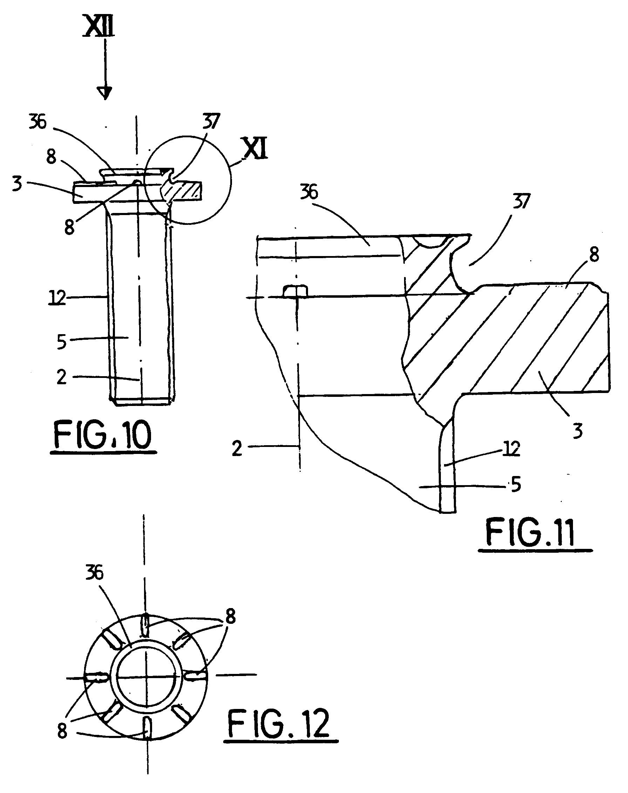

Eine weitere Ausführungsform einer erfindungsgemäßen Schraube ist in Fig. 10 bis Fig. 12 dargestellt. Diese Schraube weist einen zusätzlichen, zur Längsachse 2 konzentrischen aus ihrer Oberseite in Axialrichtung vorstehenden Schaftteil 36 auf. Im Übergangsbereich zwischen Schraubenkopf 3 und Schaftteil 36 ist ein zur Längsachse 2 konzentrischer Ringraum 37 zur Aufnahme von Blechmaterial angeordnet. Die Ausgestaltung dieses Ringraums 37 entspricht jener des vorgenannten Ringraums 6. Derartige Schrauben werden also mit ihrer Kopfoberseite in ein Trägerblech eingepreßt. Die Vorbereitung des Bleches und der Einpreßvorgang gehen wie bei dem Ausführungsbeispiel gemäß Fig.4 bis Fig.7 vonstatten. Der Vorteil dieser Ausführungsform liegt vor allem darin, daß die, in diesem Fall dem Blech im Fügezustand abgewandte Unterseite des Schraubenkopfes 3 als definierte Plan-Auflagefläche beispielsweise für elektrische Anschlußösen zur Verfügung steht. Bei derartigen elektrischen Verbindungselementen ist im Hinblick auf eine gute elektrische Kontaktierung eine möglichst großflächige Plan-Auflage anzustreben.

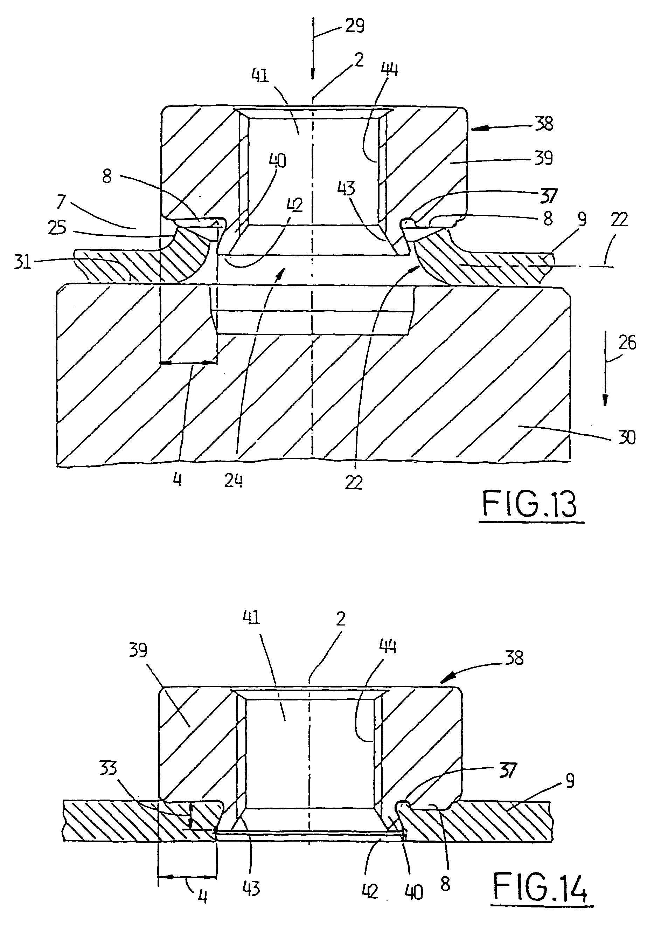

Die Darstellungen von Fig. 13 bis Fig. 17 betreffen ein als Innengewindeträger ausgebildetes, im folgenden kurz mit "Mutter" 38 bezeichnetes Einpreßteil. Die Mutter 38 enthält im wesentlichen um eine gemeinsame Längsachse 2 angeordnet einen Kopfteil 39 mit größerem Durchmesser und einen aus der Unterseite des Kopfteils 39 vorstehenden Hohlschaft 40. Durch Kopfteil 39 und Hohlschaft 40 hindurch erstreckt sich eine Durchgangsbohrung 41 mit Innengewinde 44. Der Hohlschaft weist an seinem Freiende 42 eine Innenansenkung 43 auf. Das Freiende 42 des Hohlschaftes 40 ist außerdem aufgeweitet, d.h. sein Außendurchmesser nimmt beginnend von der Unterseite des Kopfteiles 39 zum Freiende 42 hin kontinuierlich zu. Auf diese Weise entsteht ein dem oben beschriebenen Ringraum 6 etwa entsprechender Ringraum 37 im Übergangsbereich zwischen Kopfteil 39 und Hohlschaft 40 zur Aufnahme des Materials eines Bleches im Fügezustand. Aus der Unterseite des Kopfteiles 39 stehen, wie bei einer Schraube gemäß beispielsweise Fig.1, langwulstartige Formvorsprünge 8 vor, die sich in Radialrichtung nahezu über die gesamte Breite der Auflagefläche 4 des Kopfteiles 39 erstrecken und in gleichen Abständen über dessen Umfang verteilt sind.

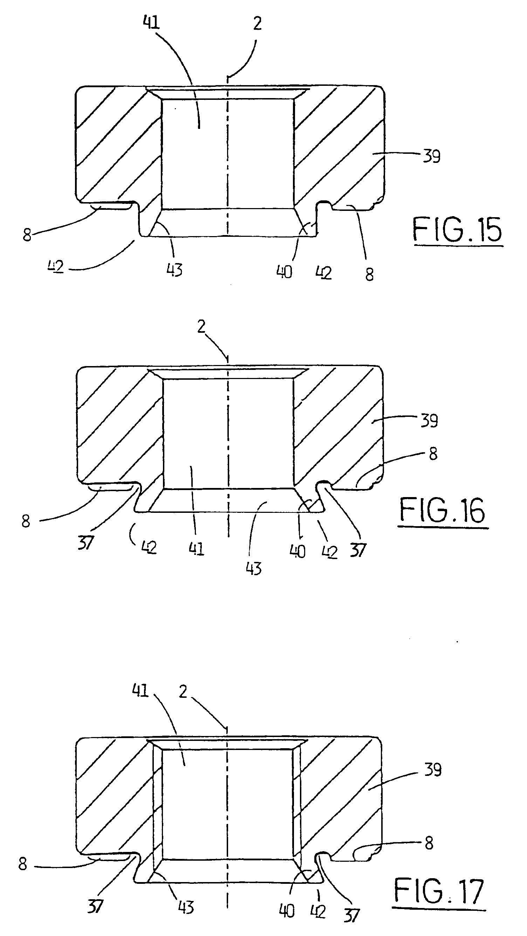

Die Herstellung einer erfindungsgemäßen Mutter geht schematisch aus der Darstellungsfolge von Fig. 15 bis Fig. 17 hervor. Der in Fig. 15 gezeigte Mutterrohling weist eine bereits durch beispielsweise eine Stauchung geformte Unterseite auf. Sein Hohlschaft 40 ist mit einer Innenansenkung 43 versehen, jedoch noch nicht aufgeweitet. Durch eine das Freiende 42 des Hohlschaftes 40 in Richtung der Längsachse 2 beaufschlagenden Stauchung wird der Hohlschaft aufgeweitet und erhält die in Fig. 16 gezeigte Form.

Das Einpressen in ein Blech erfolgt prinzipiell auf dieselbe Weise wie bei einer Schraube. Auch hier wird der Halskragen 22 (Fig.13) des Bleches 9 durch Beaufschlagung der Oberseite des Kopfteiles 39 in Richtung der Längsachse 2 gegen die Stirnseite eines Gegenwerkzeuges gepreßt, wobei sich der Lochdurchmesser verengt und Blechmaterial zur Bildung einer die Auspreßsicherheit gewährleistenden Hinterschneidung in den Ringraum 37 gepreßt wird. Bei Blechen mit größerer Dicke wird der Lochrand 25, wie aus Fig. 14 hervorgeht, zusätzlich gegen das aufgeweitete Freiende 42 des Hohlschaftes 40 unter Bildung einer Formschlußverbindung gedrückt. Diese Formschlußverbindung zwischen dem aufgeweiteten Freiende 42, das wirkungsmäßig dem vorgenannten Ringvorsprung 15 einer Schraube entspricht, und dem Lochrand 25 bewirkt auch hier eine Verbesserung der Wasserdichtigkeit und eine Erhöhung der Gesamtfestigkeit der Fügeverbindung.

## Patentansprüche

1. Verfahren zur Herstellung eines Verbundteiles durch Einpressen eines Einpreßteils (1,38) etwa in Form eines Bolzens, einer Schraube (1) oder eines Innengewindeträgers (38) in ein Flachmaterial - nachstehend kurz "Blech (9)" genannt -,
- wobei das Einpreßteil (1,38) um eine gemeinsame Längsachse (2) angeordnet
-- ein Kopfteil (3,39) größerer Breite, insbesondere größeren Durchmessers mit einer zur Längsachse (2) im wesentlichen radialen Auflagefläche (4),
-- ein einseitig in Achsrichtung über die Auflagefläche (4) hinausstehendes, zur Längsachse (2) konzentrisches Schaftteil (5,36,40) kleineren Durchmessers,
-- im Übergangsbereich zwischen Kopfteil (3,39) und Schaftteil (5,36,40) eine zur Längsachse (2) konzentrische und im wesentlichen radial nach außen offene Einschnürung als Ringraum für die Aufnahme des Blechmaterials sowie
-- über den Kopfumfang verteilt aus der Auflagefläche (4) vorstehende Formvorsprünge (8) als Verdrehsicherung gegenüber dem Blech (9)
aufweist,
- wobei das Blech (9) zur Aufnahme des Schaftteiles (5,36,40) des Einpreßteils (1,38) mit einer Lochung (24) versehen ist
-- deren Durchmesser einen zum Durchführen des Schaftteiles (5,36,40) ausreichenden Innendurchmesser aufweist und
-- deren Rand aus der Blechebene in Richtung auf das Kopfteil (3,39) aufgebogen ist,
und
- wobei das Ein preßteil (1,38) mit seinem Schaftteil (5,36,40) in Richtung seiner Längsachse (2) unter Rückbiegung des Lochungsrandes in die Lochung (24) eingepreßt wird, bis seine Auflagefläche (4) fest an der Blechoberfläche anliegt,
dadurch gekennzeichnet,
daß die Lochung (24) zu einem so weit über die Blechoberfläche hinausstehenden Halskragen (22) aufgebogen ist, daß durch den Halskragen (22) im Durchmesserbereich des Lochrandes eine solche Anhäufung an Blechmaterial entsteht, daß das Einpressen unter Rückverformung des Halskragens (22) infolge Verringerung des Lochdurchmessers (28) eine Füllung des Ringraumes (6,37) zwischen Kopfteil (3,39) und Schaftteil (5,36,40) ohne eine wesentliche Reduzierung der im Fügebereich bestehenden Blechstärke bewirkt.

2. Verfahren nach Anspruch 1,
dadurch gekennzeichnet,
daß in Einpreß-Ausgangsstellung der Lochrand (25) des aufgebogenen Halskragens in eine etwa radiale Richtung zur Längsachse (2) einwärts gebogen ist.

3. Verfahren nach Anspruch 1 oder 2,
gekennzeichnet durch
einen solchen Lochdurchmesser (28), daß das Einpreßteil abriebfrei in das Loch (24) einsetzbar ist.

4. Einpreßteil für ein Verfahren nach einem der Ansprüche 1 bis 3,
dadurch gekennzeichnet,
daß zur Bildung eines Ringvorsprunges (15) als schaftseitige Flanke des Ringraumes (6) benachbart zu diesem eine zur Längsachse (2) konzentrische Ringnut (17) in das Schaftteil (5) eingewalzt ist, wobei sich der Ringraum (6,37) über die von der Kopfauflagefläche (4) aufgespannte Mantelfläche hinaus teilweise in den Kopfteil (3,39) hinein erstreckt.

5. Einpreßteil nach Anspruch 4,
dadurch gekennzeichnet,
daß der Ringraum (6,37) die Querschnittsform etwa einer Rille mit ausgerundetem Rillenboden aufweist.

6. Einpreßteil nach Anspruch 5,
dadurch gekennzeichnet,
daß die Mittel- oder Symmetrieachse (11) der Rillenform einen rechten oder einen leicht spitzen, zum Kopfteil hin konvergierenden Winkel (α) mit der Längsachse (2) bildet.

7. Einpreßteil nach Anspruch 6,
dadurch gekennzeichnet,
daß die Mittel- oder Symmetrieachse (11) eine Gerade ist.

8. Einpreßteil nach einem der Ansprüche 4 bis 7,
dadurch gekennzeichnet,
daß die Formvorsprünge (8) in gleichen Umfangsabständen verteilt angeordnet sind und eine Wulstform aufweisen, mit etwa radial zur Längsachse (2) verlaufenden Wulstrichtungen und im wesentlichen parallel zur Längsachse (2) verlaufenden Flanken.

9. Einpreßteil nach einem der Ansprüche 4 bis 8,
dadurch gekennzeichnet,
daß das Schaftteil (5,36,40) einen in Radialrichtung vorspringenden, im Querschnitt etwa keilförmig spitz zulaufenden Ringvorsprung (15) aufweist, dessen kopfseitige Flanke (16) im wesentlichen die schaftseitige Flanke des Ringraums (6) bildet.

## Claims

1. Method of producing a composite part by pressing an insertion part (1, 38), approximately in the form of a bolt, a screw (1) or an internal-thread bearer (38), into a flat material - hereinafter briefly called "metal sheet (9)" -,
- in which the insertion part (1, 38) has, arranged around a common longitudinal axis (2),
-- a top part (3, 39) of relatively great width, in particular of relatively great diameter, with a resting surface (4) running essentially radially relative to the longitudinal axis (2),
-- a shank part (5, 36, 40) of smaller diameter, which projects beyond the resting surface (4) on one side in the axial direction and is concentric to the longitudinal axis (2),
-- in the transition region between the top part (3, 39) and the shank part (5, 36, 40), a constriction which is concentric to the longitudinal axis (2) and is open essentially radially outwards as an annular space for receiving the sheet-metal material, and
-- shaped projections (8) projecting out of the resting surface (4) distributed over the circumference of the top as a securement against rotation relative to the metal sheet (9),
- in which the metal sheet (9) is provided with a perforation (24) for receiving the shank part (5, 36, 40) of the insertion part (1, 38),
-- whose diameter has an inside diameter which is sufficient to pass the shank part (5, 36, 40) through, and
-- whose edge is bent up out of the plane of the metal sheet in the direction of the top part (3, 39), and which
-- is bent up to form a neck collar (22) which projects so far beyond the surface of the metal sheet that such an accumulation of sheet-metal material is produced by the neck collar (22) in the region of the diameter of the edge of the hole that the pressing-in operation causes filling of the annular space (6, 37) between the top part (3, 39) and the shank part (5, 36, 40) with the neck collar (22) being deformed back as a result of a reduction in the hole diameter (28),
characterized in that the insertion part (1, 38) is pressed with its shank part (5, 36, 40) into the perforation (24) in the direction of its longitudinal axis (2), with the edge of the perforation being bent back and without any substantial reduction in the thickness of the metal sheet which exists in the joint region, in such a way that its resting surface (4) rests firmly against the surface of the metal sheet and only the shaped projections (8) penetrate into the sheet-metal material.

2. Method according to Claim 1, characterized in that, in the starting position for pressing in, the edge (25) of the hole of the bent-up neck collar is bent inwards in an approximately radial direction relative to the longitudinal axis (2).

3. Method according to Claim 1 or 2, characterized by such a hole diameter (28) that the insertion part can be inserted into the hole (24) without abrasion.

4. Insertion part for a method according to one of Claims 1 to 3, characterized in that an annular groove (17) concentric to the longitudinal axis (2) is made in the shank part (5) to form an annular projection (15) as a shank-side flank of the annular space (6) adjacent thereto, the annular space (6, 37) extending beyond the outer surface spanned by the top resting surface (4), partially into the top part (3, 39).

5. Insertion part according to Claim 4, characterized in that the annular space (6, 37) has approximately the cross-sectional shape of a channel with a rounded channel base.

6. Insertion part according to Claim 5, characterized in that the mid-axis or axis of symmetry (11) of the channel shape forms a right angle (α) or a slightly acute angle (α) converging towards the top part with the longitudinal axis (2).

7. Insertion part according to Claim 6, characterized in that the mid-axis or axis of symmetry (11) is a straight line.

8. Insertion part according to one of Claims 4 to 7, characterized in that the shaped projections (8) are arranged distributed at equal circumferential intervals and have a bead form with bead directions running approximately radially relative to the longitudinal axis (2) and flanks running essentially parallel to the longitudinal axis (2).

9. Insertion part according to one of Claims 4 to 8, characterized in that the shank part (5, 36, 40) has an annular projection (15) which projects in the radial direction, tapers to a point in an approximately wedge-shaped manner in cross-section, and whose top-side flank (16) essentially forms the shank-side flank of the annular space (6).

## Revendications

1. Procédé de fabrication d'un élément composite par enfoncement d'une pièce à enfoncer (1, 38) ayant approximativement la forme d'un goujon, d'une vis (1) ou d'un élément porteur d'un taraudage intérieur (38) dans un matériau plat - désigné ci-après brièvement comme "tôle (9)" -, dans lequel :
- la pièce à enfoncer (1, 38) comprend, agencés autour d'un axe longitudinal commun (2) :
-- une partie de tête (3, 39) de largeur importante, en particulier de diamètre important, avec une surface d'appui (4) sensiblement radiale par rapport à l'axe longitudinal (2),
-- une partie de fût (5, 36, 40) de petit diamètre, concentrique à l'axe longitudinal (2) et dépassant d'un seul côté dans la direction axiale au-delà de la surface d'appui (4) ;
-- un rétrécissement prévu dans la zone de transition entre la partie de tête (3, 39) et la partie de fût (5, 36, 40), concentrique à l'axe longitudinal (2) et ouvert sensiblement radialement vers l'extérieur, formant une chambre annulaire pour recevoir le matériau de la tôle, et
-- des saillies en forme (8) qui dépassent au-delà de la surface d'appui (4) en étant réparties sur la périphérie de la tête, en tant que sécurité anti-rotation par rapport à la tôle (9),
- la tôle (9) est pourvue d'un perçage (24) pour recevoir la partie de fût (5, 36, 40) de la pièce à enfoncer (1, 38), ledit perçage étant tel que :
-- son diamètre intérieur suffit pour le passage de la partie de fût (5, 36, 40), et
-- sa bordure est recourbée hors du plan de la tôle en direction de la partie de tête (9, 39),
et
- la pièce à enfoncer (1, 38) est enfoncée avec sa partie de fût (5, 36, 40) en direction de son axe longitudinal (2) cependant que la bordure du perçage est recourbée jusque dans le perçage (24) jusqu'à ce que sa surface d'appui (4) soit appliquée fermement contre la surface de la tôle,
caractérisé en ce que:
- le perçage est recourbé pour former un col (22) qui dépasse au-delà de la surface de la tôle, aussi loin qu'il se produit à travers le col (22) dans la région du diamètre de la bordure du perçage, une telle accumulation de matériau de la tôle que, par déformation en retour du col (22) suite à une diminution du diamètre du perçage (28), l'enfoncement produit un remplissage de l'espace annulaire (6, 37) entre la partie de tête (3, 39) et la partie de fût (5, 36, 40), sans réduction sensible de l'épaisseur de tôle présente dans la zone de jointure.

2. Procédé selon la revendication 1, caractérisé en ce que, dans la position de départ d'enfoncement, la bordure recourbée du perçage (25) du col est courbée vers l'intérieur dans une direction approximativement radiale par rapport à l'axe longitudinal (2).

3. Procédé selon l'une ou l'autre des revendications 1 et 2, caractérisé en ce que le diamètre du perçage (28) est tel que la pièce à enfoncer peut être mise en place sans abrasion dans le perçage (24).

4. Pièce à enfoncer, pour le procédé selon l'une des revendications 1 à 3, caractérisée en ce que, pour former une saillie annulaire (15) en tant que flanc côté fût de l'espace annulaire (6), il est ménagé par galetage dans la partie de fût (5) une gorge annulaire (17) concentrique à l'axe longitudinal (2) au voisinage dudit espace annulaire, ledit espace annulaire (6, 37) s'étendant au-delà de la surface enveloppe définie par la surface d'appui (4) de la tête, partiellement jusque dans la partie de tête (3, 39).

5. Pièce à enfoncer selon la revendication 4, caractérisée en ce que l'espace annulaire (6, 37) présente en section transversale une forme approximative d'une rainure avec un fond de rainure arrondi.

6. Pièce à enfoncer selon la revendication 5, caractérisée en ce que l'axe médian ou axe de symétrie (11) de la forme en rainure forme avec l'axe longitudinal (2) un angle droit ou légèrement aigu (α) qui converge en direction de la partie de tête.

7. Pièce à enfoncer selon la revendication 6, caractérisée en ce que l'axe médian ou axe de symétrie (11) est une droite.

8. Pièce à enfoncer selon l'une des revendications 4 à 7, caractérisée en ce que les saillies en forme (8) sont agencées en étant réparties à des distances périphériques égales, et présentent une forme en bourrelet, telle que les bourrelets s'étendent en direction approximativement radiale par rapport à l'axe longitudinal (2) et que les flancs s'étendent sensiblement parallèlement à l'axe longitudinal (2).

9. Pièce à enfoncer selon l'une des revendications 4 à 8, caractérisée en ce que la partie de fût (5, 36, 40) présente une saillie annulaire (15) qui dépasse en direction radiale et qui converge sous forme d'un coin approximativement aigu en section transversale, dont le flanc côté tête (16) forme sensiblement le flanc côté fût de l'espace annulaire (6).
